# EUROPEAN PATENT SPECIFICATION

(11) **EP 4 396 306 B1**
(45) Date of publication and mention of the grant of the patent: **30.07.2025**
(21) Application number: 22765589.1
(22) Date of filing: 30.08.2022
(51) Int. Cl.: C11C 3/00, C10G 3/00, C10G 25/00, C10G 31/06, C10G 31/09, C10G 45/62, C11B 3/10, B01D 15/16

(54) **A METHOD FOR DECREASING FEED IMPURITIES**
VERFAHREN ZUR VERRINGERUNG VON ZUFUHRVERUNREINIGUNGEN
PROCÉDÉ POUR DIMINUER LES IMPURETÉS D'ALIMENTATION

(30) Priority: 30.08.2021 FI 20215904
(43) Date of publication of application: 10.07.2024
(73) Proprietor: Neste Oyj, 02150 Espoo (FI)
(72) Inventor: IKONEN, Elias, 06101 Porvoo (FI); LIPPONEN, Katriina, 06101 Porvoo (FI); KAKKO, Tia, 06101 Porvoo (FI)
(74) Representative: Espatent Oy
(86) International application number: PCT/FI2022/050557
(87) International publication number: WO 2023/031511

(56) References cited:
- WO-A1-2020/141255
- US-A1- 2020 017 775
- GUILLEMANT JULIE ET AL: "Towards a new pseudo-quantitative approach to evaluate the ionization response of nitrogen compounds in complex matrices", SCIENTIFIC REPORTS, vol. 11, no. 1, 19 April 2021 (2021-04-19), XP055979290, Retrieved from the Internet <URL:https://www.nature.com/articles/s41598-021-85854-7.pdf> DOI: 10.1038/s41598-021-85854-7
- BELARBI SAIDA ET AL: "Comparison of new approach of GC-HRMS (Q-Orbitrap) to GC-MS/MS (triple-quadrupole) in analyzing the pesticide residues and contaminants in complex food matrices", FOOD CHEMISTRY, ELSEVIER LTD, NL, vol. 359, 23 April 2021 (2021-04-23), XP086598917, ISSN: 0308-8146, [retrieved on 20210423], DOI: 10.1016/J.FOODCHEM.2021.129932

## Description

### TECHNICAL FIELD

The present disclosure generally relates to the field of hydrotreating of renewable feedstocks. It is specifically related to the feedstocks for said hydrotreating and impurities therein. In particular, here is provided a process for analysing and identifying at least one organic nitrogen containing compound, based on which, an effective pretreatment for the feedstock can be selected.

### BACKGROUND

Processes for hydrotreating of renewable feedstocks in order to produce renewable fuels have been known since the 90's. One of the earliest publications, FI100248 B1, discloses how a vegetable oil or a waste material such as TOFA is converted to n-paraffins and further to isoparaffins in catalytic processes.

Typical feedstocks for such processes comprise plant oils/fats and animal oils/fats and waste or residual materials thereof. Some relevant waste or residue materials, such as PFAD or CTO are known as interesting feedstocks as well. The predominant compounds in said feeds are fatty acids, fatty acid alkyl esters, such as FAMEs and/or glycerides, more specifically, fatty acid triglycerides, diglycerides and monoglycerides. Nevertheless, depending on the origin of the feedstock, they contain further components, some of which are useless or even harmful for the fuel production.

Some impurities passivating, deactivating, plugging, poisoning or otherwise distracting the applied catalysts have been identified. The above referred distractions deteriorate the catalyst performance and shorten the catalyst lifetime. For example, removal of metal impurities, phosphates and phospholipids has been known to be necessary for the catalyst to stay active.

The heteroatom containing organic compounds in the feedstock vary depending on the feedstock in question. Oxygen as heteroatom in the feed may be removed by hydrodeoxygenation (HDO) reactions when hydrocarbons are produced from oxygenated feedstocks. In addition to gaseous H₂O, other heteroatoms, such as sulfur and nitrogen are mostly reacted to gaseous H₂S and NH₄ on typical HDO catalysts. However, some are complex compounds as such and remain unreacted or convert to further heteroatom containing organic compounds.

Moreover, in the impurity identification the feedstock itself is difficult as a matrix due to the different compounds contained therein. Typically, the physical properties of the impurities are close to those forming the feedstock matrix. As a consequence, the identification of the impurities has been difficult because the matrix components disturb the impurity analytics.

It is common to analyze the total nitrogen content from fatty samples. However, the range of different organic nitrogen derivatives with varying functional groups is broad with some compounds more detrimental than others to the catalysts on one hand, and to the conduct of a more specific analysis on the other. Consequently, the need to remove certain compounds before hydrotreating, specifically before the hydroisomerisation, and before the analyses varies as well. This cannot be predicted by the total nitrogen content solely.

Recently, some methods for studying challenging matrices for the presence of specific organic nitrogen species or a group thereof have been developed. The combination of gas chromatography/mass spectrometry (GC/MS) can roughly suggest the type of organic nitrogen species, such as amides, nitriles, amines, pyridines, pyrazines, pyrroles and indoles by direct analysis of sludge bio-oil. In an attempt to have more detailed results, Sultana & Johnson focused on sample preparation and reported a protocol for fractionation and identification of primary amides from bio-oil produced by fast pyrolysis of sewage sludge in Sultana T, Johnson ME. Sample preparation and gas chromatography of primary fatty acid amides. In: J Chromatogr A. 2006 Jan 6;1101(1-2):278-85. They proposed column chromatography with a sequence of solvent elution to separate model compounds sufficiently for GC/MS analysis. However, they reported the GC/MS-detectable organic nitrogen species only accounting for 16.3% of nitrogen in the bio-oil. Further, they reported difficulties in detection of strongly polar and/or less volatile organic nitrogen species, because of limitations of GC/MS analysis.

US 2020/017775 A1 discloses processes for pretreating nitrogen-containing feedstocks of biological origin by degumming, bleaching and subsequently hydroprocessing to produce hydrocarbons.

There remains a need for better extraction methods for feedstock samples from the feedstock matrix for identification. Further, there is a need for identifying the impurities in the feedstock for better understanding and controlling the following process steps. There is yet a further need for using the analysis results from impurity identification for selection of feedstock pretreatment(s) to remove organic nitrogen compound or compounds therefrom.

### SUMMARY

It is an aim of the present disclosure to eliminate at least some of the problems relating to the known technology and to provide a process for a specific analysis where detection of organic nitrogen compound(s) provides data for feedstock pretreatment selection.

It is a further aim of the present disclosure to provide a novel procedure for sample preparation to enable the specific analysis of organic nitrogen compound(s). According to the invention here is provided a process according to claim 1, for pretreating renewable feedstock, said feedstock comprising triacylglycerols suitable for hydrotreatment into branched paraffinic hydrocarbons, and an organic nitrogen compound.

The range of different organic nitrogen containing compounds in the feedstock varies, in particular, in recycled or waste feedstocks. Some organic nitrogen functionalities are not converted in hydrotreatment to ammonia but to other functionalities. For example, fatty acid amides have been found to be converted to fatty acid amines under hydrotreatment conditions. Hence, instead of hydrodenitrogenation and removal as ammonia through gas separation, some organic nitrogen containing compounds as such or as derivatives thereof, may be carried over to the liquid product, unless a specific pretreatment for the feedstock is applied prior to hydrotreatment. The present process provides information on the organic nitrogen compounds contained in the feedstock, which information can then be used for selecting an appropriate pretreatment or a sequence of pretreatments to ensure desirable low levels of said organic nitrogen compounds entering the hydroprocessing.

The present inventors have surprisingly found a process capable of identifying formerly unidentifiable organic nitrogen compounds, for detection of which no analytical methods were previously available. Furthermore, with the present disclosure, the detection of said compounds can be used in selection of an appropriate pretreatment for triacylglycerol containing feedstock, suitable for hydrotreatment into branched paraffinic hydrocarbons. Underlying the present identification process is a detection of nitrogen compounds deposited on the catalysts used in said hydrotreatment, especially those for conversion into branched paraffinic hydrocarbons. By reducing the amount or even removal of certain organic nitrogen compounds by an appropriate pretreatment, the catalyst performance and/or catalyst life cycle may be enhanced or prolonged.

According to a second aspect outside of the present invention, herein is provided a use of a gas chromatography/high-resolution mass spectrometry (GC-HRMS) analysis for identifying an organic nitrogen compound present in a sample of a renewable feedstock comprising triacylglycerols, the use further comprising based on said identifying, selection of a pretreatment reducing the organic nitrogen compound content of said renewable feedstock.

In the analytics of complex matrices, such as renewable feedstocks comprising triacylglycerols and especially when originating from waste and residues, the methods available and suitable for detailed identification, detection and quantification of impurities have been limited because the analysis data obtained for the triacylglycerols overlap with that of the compounds of interest. The present inventors have now developed a process providing efficient sample purification by removal of triacylglycerols and consequent organic nitrogen compound identification. The analysis results can then be used for selection of an appropriate pretreatment for the renewable feedstock.

Different non-binding example aspects and embodiments are used in this disclosure merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:

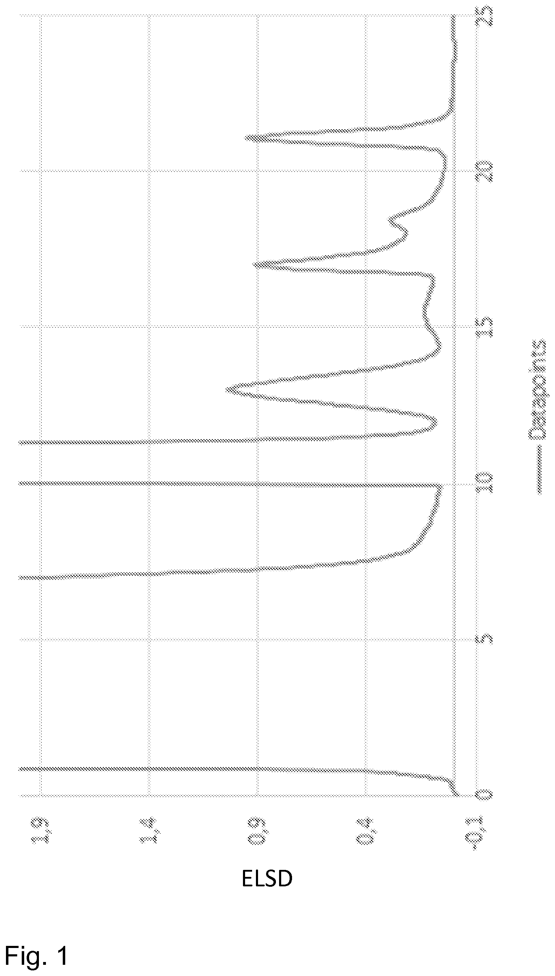

- Fig. 1: provides as an example, an elugram of an extraction done using eluent gradients for a feedstock sample, wherein evaporative light scattering detector, (ELSD), signal intensity is given as function of time (min).
- Fig. 2: describes schematically the overall process according to the present invention.

### DETAILED DESCRIPTION

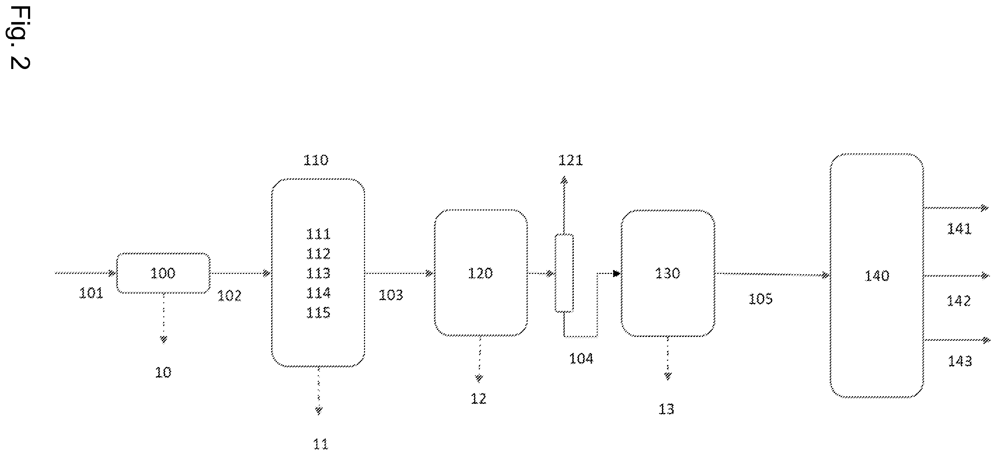

The overall process according to the present invention is next described in more detail with reference to schematic Figure 2.

The renewable feedstock (101) is fed to a storage tank (100) where a sample (10) thereof can be taken. An analysis (not shown) is conducted according to the present procedure, to provide as a result, the identity and optionally quantity of one or more organic nitrogen compounds in the feedstock. Based on this result, a pretreatment (110) is selected, and the analysed feedstock (102) is fed to one or more appropriate pretreatment(s) (111, 112, 113, 114, 115). Pretreatments (111, 112, 113, 114, 115) are presented as alternatives or optionally, a sequence of two or more pretreatments may be conducted. Further sample(s) (11) may be taken in between or after pretreatment(s). The pretreated renewable feedstock (103) is next fed to hydrotreatment. In the embodiment described in Figure 2, the hydrotreatment is conducted as a combination of hydrodeoxygenation (120) and hydroisomerisation (130) reactions in respective reactors. The effluent from hydrodeoxygenation is subject to gas/liquid separation, wherefrom the gases (121) are removed and the liquid product only (104) is led to the hydroisomerisation reactor (130). The effluent (105) from the hydroisomerisation reaction may optionally also be subject to gas/liquid separation (not shown), and separated to different products (141, 142, 143) in product fractionator (140).

Regarding the organic nitrogen compounds as impurities for the process, the most important sample is obviously sample (10) taken from the feedstock (101). The selection of appropriate pretreatment is based on this result. However, further samples taken in between or after pretreatment sample(s) (11), such as a sample (12) taken after hydrodeoxygenation or yet another sample (13) taken after hydroisomerisation, may provide data on the level and identity of organic nitrogen impurities still remaining after respective reactors. At least one sample (11) is however taken and analysed in the present process to confirm said pretreated renewable feedstock (103) having a content of the organic nitrogen compound(s) lower than that in the sample (10). Alternatively, a total nitrogen content in sample (11) which is lower than the content of the organic nitrogen compound(s) in the sample (10) is equally indicative of effective pretreatment. The present inventors have noted that hydrodeoxygenation conditions convert fatty acid amides to fatty acid amines instead of ammonia, which could be removed with gases (121). The steps of the present analysis can be applied to samples from further unit processes, such as after hydrodeoxygenation and/or after hydroisomerisation as well.

In view of the overall process, proof on the power of the pretreatment(s) (111, 112, 113, 114, 115) can also be gained by analysis of gases (121). The ammonia formed in the hydrodeoxygenation reactor through hydrodenitrogenation reactions can be taken into account when monitoring the effectiveness of the pretreatment selected.

The renewable feedstock subject to the present process comprises triacylglycerols and is suitable for hydrotreatment to provide branched paraffinic hydrocarbons useful as renewable fuels or fuel components as end product.

Typically, the feedstocks as used herein refer to renewable feedstocks i.e. feedstocks derived from raw material of biological origin. The renewable character of carbon-containing compositions, such as feedstocks and products of biological origin i.e., renewable feedstock and products, can be determined by comparing the 14C-isotope content of the feedstock to the 14C-isotope content in the air in 1950. The ¹⁴C-isotope content can be used as evidence of the renewable or biological origin of a feedstock, any intermediate or a product. Carbon atoms of renewable material comprise a higher number of unstable radiocarbon (¹⁴C) atoms compared to carbon atoms of fossil origin. Therefore, it is possible to distinguish between carbon compounds derived from biological sources, and carbon compounds derived from fossil sources by analysing the ratio of ¹²C and ¹⁴C isotopes. Thus, a particular ratio of said isotopes can be used to identify renewable carbon compounds and differentiate those from non-renewable i.e. fossil carbon compounds. The isotope ratio does not change in the course of chemical reactions. Example of a suitable method for analysing the content of carbon from biological sources is ASTM D6866 (2020). An example of how to apply ASTM D6866 to determine the renewable content in fuels is provided e.g. in the article of Dijs et al., Radiocarbon, 48(3), 2006, pp 315-323. For the purpose of the present invention, a carbon-containing material, such as a feedstock or product is considered to be of renewable origin if it contains 90% or more modern carbon (pMC), such as about 100% modern carbon, as measured using ASTM D6866.

The sources for renewable feedstock are numerous including oils and/or fats, usually containing lipids (e.g. fatty acids or glycerides), such as plant oil/fats, vegetable oil/fats, animal oil/fats, algae oil/fats, fish oil/fats and algae oil/fats, or oil/fats from other microbial processes, for example, genetically manipulated algae oil/fats, genetically manipulated oil/fats from other microbial processes and also genetically manipulated vegetable oil/fats. The feedstock of renewable origin, such as plant oils and animal fats, is well suited for the process. The majority of these plant oils and animal fats are typically composed of fatty acids, either as free fatty acids or as esters of free fatty acids, such as fatty acids of 25 wt-% or 40 wt-% or more. Components derived from these materials may also be used, for example, alkyl esters, typically C1-C5 alkyl esters, such as methyl, ethyl, propyl, iso-propyl, butyl, sec-butyl esters, or olefins. Additionally, the renewable feedstock may include C1-C5 alkyl alcohols, particularly methyl, ethyl, propyl, iso-propyl, butyl, and/or sec-butyl esters of fatty acids, and any combinations thereof. Examples of esters of free fatty acids are fatty acid glyceride esters (mono-, di- and/or tri-glyceridic) or for example the fatty acid methyl esters (FAME) or fatty acid ethyl esters (FAE). Accordingly, the renewable feedstock may contain 25 wt-% or more of fatty acids or fatty acid esters.

The renewable feedstock may additionally include free fatty acids, fatty acid esters (including mono-, di-, and triglycerides), or combinations thereof. For example, the free fatty acids may include free fatty acids obtained by stripping free fatty acids from a triglyceride transesterification feedstock. The renewable feedstock may include the fatty acid distillate from vegetable oil deodorisation.

The feedstock may be selected from animal and fish oils/fats, plant oils and/or vegetable oils and/or microbial oils like babassu oil, palm seed oil, carinata oil, olive oil, coconut butter, soybean oil, canola oil, coconut oil, muscat butter oil, rapeseed oil, peanut oil, sesame oil, maize oil, sunflower oil, poppy seed oil, cottonseed oil, soy oil, laurel seed oil, crude tall oil, tall oil, tall oil fatty acid, tall oil pitch, crude palm oil, palm oil, palm oil fatty acid distillate, jatropha oil, palm kernel oil, camelina oil, archaeal oil, bacterial oil, fungal oil, protozoal oil, algal oil, seaweed oil, mustard seed oil, oils from halophiles, lauric-myristic acid group (C12-C14) including milk fats, palmitic acid group (C16) including earth animal fats, stearic acid group (C18) including earth animal fats, linoleic acid group (unsaturated C18) including whale and fish oils, erucic acid group (unsaturated C22) including whale and fish oils, oleo stearic acid group (conjugated unsaturated C18) including whale and fish oils, fats with substituted fatty acids (ricin oleic acid, C18) such as castor oil, and mixtures of any two or more thereof. The oils of the feedstock may be classified as crude, degummed, heat treated and RBD (refined, bleached, and deodorized) grade, depending on the level of pretreatment and residual phosphorus and metals content. Animal fats and/or oils may include inedible tallow, edible tallow, technical tallow, floatation tallow, lard, poultry fat, poultry oils, fish fat, fish oils, and mixtures of any two or more thereof. Greases may include yellow grease, brown grease, waste vegetable oils, restaurant greases, trap grease (FOG) from municipalities such as water treatment facilities, and spent oils from industrial packaged food operations, and mixtures of any two or more thereof.

The feedstock may include derivatives of natural fats include mono- or diglycerides of C10-C28 fatty acids, C10-C28 fatty acids, C10-C28 fatty acid anhydrides, non-glyceride C10-C28 fatty acid esters, C10-C28 fatty alcohols, C10-C28 fatty aldehydes and C10-C28 fatty ketones. The C10-C28 fatty acids, their mono- and diglycerides, are typically prepared by hydrolysis of the corresponding triglyceride. The non-glyceride C10-C28 fatty acid esters are mainly prepared from the triglycerides by transesterification. The C10-C28 fatty alcohols, aldehydes and ketones are prepared by reduction, usually by hydrogenation, of the corresponding fatty acids. Advantageously, the feedstock hydrocarbons may be of C10-C24.Most typical exemplary feedstocks are animal fats and palm oil fatty acid, especially those originating from waste and residues.

In one embodiment, the feedstock includes waste and residue material selected from one or more of originating from animal fat/oil, plant fat/oil, for example sludge palm oil, such as palm effluent sludge (PES) or palm oil mill effluent (POME), used cooking oil (UCO), or crude tall oil (CTO), acid oils (ASK), brown grease (BG), yellow grease (YG), low-quality animal fat (LQAF), poultry fat (AFP), spent bleaching earth oil (SBEO), technical corn oil (TCO) or lignocellulosic based oils, municipal solid waste-based oils, or algae-based oils.

Typically, the waste and residue materials as feedstock contain relatively high contents of metals, nitrogen and/or phosphorous, rendering them to be defined as low-quality feedstocks. Different feedstocks may contain metals (total weight of any metals detected) more than 50 wppm, more than 200 wppm, or even more than 300 wppm, like poultry fat more than 380 wppm or PES more than 500 wppm, even more than 800 wppm metals. Most abundant metals are sodium, potassium, magnesium, calcium, iron, and copper. Correspondingly, the phosphorous content calculated as elemental phosphorous in said waste and residue materials as feedstock may be more than 50 wppm, more than 70 wppm, more than 100 wppm, or even more than 200 wppm, for example more than 300 wppm in BG.

It has been found that the majority of the nitrogen content in said waste and residue materials is initially in the form of organic nitrogen compounds as impurities. Of specific interest here is the wide variety of organic nitrogen compounds, which often are more difficult to remove by conventional feedstock pretreatments from a matrix comprising triacylglycerols. Animal fats, as a specific feedstock, comprise peptides, amino acid derivatives etc. which have proven to be difficult to remove from the feedstock stream.

The oils and/or fats of biological origin may include a single kind of oil, a single kind of fat, mixtures of different oils, mixtures of different fats, mixtures of oil(s) and fat(s), fatty acids, glycerol, and/or mixtures of the afore-mentioned. Typically, when waste and residue material are used, they comprise mixtures of several components and accordingly, a range of several organic nitrogen containing compounds as impurities.

It has been previously known that the feed impurities include nitrogen. It is not uncommon that animal fat can contain nitrogen 1000 ppm or even higher measured as elemental nitrogen. The typical way of handling undesirable impurities in feedstocks, such as nitrogen impurities, is to pretreat the feedstock prior to hydrotreatment. It is simple to remove the water-soluble nitrogen compounds, such as inorganic nitrogen through degumming. However, in animal fat, a major part of the nitrogen compounds are oil soluble organic nitrogen compounds, and much more difficult to reduce or remove than the water-soluble nitrogen compounds. With the present process providing specific knowledge on organic nitrogen compounds and measures for removal thereof contributes to low content of total nitrogen in the pretreated renewable feed and in further streams, such as hydrodeoxygenation product. Preferably said hydrodeoxygenation product before feeding to hydroisomerisation contains more than 99 wt% hydrocarbons and less than 0.3 wppm nitrogen, measured as elemental nitrogen.

A number of plant oils and animal fats may contain typical amounts of organic nitrogen compounds as impurities, such as between 1-100 ppm, measured as elemental nitrogen. By using the present process and analyses therein, it is possible to use feedstocks having a high nitrogen level. It is possible to use a feedstock that has for example a nitrogen content of more than 60 wppm, more than 100 wppm, more than 300 wppm, more than 1000 wppm, or even more than 2000 wppm, for example, within range of 300-1200 wppm. In some embodiments a feedstock that has a nitrogen content of more than 1000 wppm, such as in animal fat.. Typical ranges for nitrogen content in waste and residue materials as feedstock may be from 300 wppm to 2500 wppm, or more, such as 500 wppm or more, for example 800 wppm or more. The feedstocks may for example have a nitrogen content of up to 1500 wppm, such as 2500 wppm, even up to 4500 wppm. Examples of feedstocks with high nitrogen impurity content include some animal fats, namely BG, AFP and LQAF, which can have nitrogen content of about 1000 wppm, for example in the range of 600 to 1400 wppm. The feedstock may be made up of a mixture of oxygenated hydrocarbons from different sources, should that be desired. For example, 50% of a palm oil having 23 ppm nitrogen impurity may be mixed with 50% animal fat having 1000 ppm nitrogen impurity to create a feedstock having a nitrogen impurity of 512 ppm. The feedstock may therefore be selected from plant oils, animal fats, or mixtures thereof. The present process has shown to be specifically useful when feedstock comprises animal fats.

The total nitrogen impurities are measured as elemental nitrogen. A method for measuring elemental nitrogen is ASTM D572, which may be more appropriate above 100 wppm.

The pretreated renewable feedstock of the present method needs to be suitable for hydrodeoxygenation. Typically, the pretreated renewable feedstock when entering into a hydrodeoxygenation reactor or a catalyst bed thereof should not include more than 10 w-ppm, preferably not more than 5 w-ppm, more preferably not more than 1 w-ppm alkali metal and alkaline earth metal impurities, calculated as elemental alkaline and alkaline earth metals; not more than 10 w-ppm, preferably not more than 5 w-ppm, more preferably not more than 1 w-ppm other metals, calculated as elemental metals; not more than 1000 w-ppm, preferably not more than 500 w-ppm, more preferably not more than 150 w-ppm, most preferably not more than 50 w-ppm, such as not more than 5 w-ppm, such as not more than 1 w-ppm nitrogen containing impurities, calculated as elemental nitrogen; not more than 30 w-ppm, preferably not more than 15 w-ppm, more preferably not more than 5 w-ppm, such as not more than 1 w-ppm phosphorus containing impurities, calculated as elemental phosphorus; optionally not more than 100 w-ppm, preferably not more than 50 w-ppm, most preferably not more than 30 w-ppm, such as not more than 10 w-ppm, such as not more than 5 w-ppm sulphur containing impurities, calculated as elemental sulphur, and optionally not more than 20 w-ppm, preferably not more than 10 w-ppm, more preferably not more than 5 w-ppm chlorine containing impurities, calculated as elemental chlorine. Depending on the efficiency of the hydrotreatment catalyst bed system and the hydrotreatment reactor unit configuration even a high amount of nitrogen impurities in the feed may be tolerated, and the effluent from the HDO may contain suitably low amount of nitrogen impurities to enable subjecting it to subsequent catalytic processes.

As used herein, hydrotreating of the pretreated feedstock refers to hydrodeoxygenation, hydrodesulfurisation, hydrodenitrogenation, hydrodehalogenation (such as hydrodechlorination), hydrogenation of double bonds, hydrocracking, hydroisomerisation, and it also removes some metals. Hydrotreating mainly removes covalently bound oxygen as water from the fatty acids and eventual fatty acid esters, such as reminder glyceride molecules and is therefore also referred to as hydrodeoxygenation (HDO). From HDO, a liquid product, comprising mainly n-paraffins, is recovered.

However, hydrogen and hydrotreating capacity is also consumed by other reactions, such as hydrodenitrogenation. Therefore, an appropriate pretreatment of the feedstock improves the HDO-capacity and performance of the catalysts by removal of identified organic nitrogen containing compounds.

The hydrodeoxygenation is preferably conducted in the presence of a hydrodeoxygenation catalyst selected from Pd, Pt, Ni, Co, Mo, Ru, Rh, W, or any combination of these, such as CoMo, NiMo, NiW, CoNiMo, on a support, wherein the support is preferably alumina and/or silica.

The hydrodeoxygenation may take place at reaction conditions comprising a temperature in the range from 100 to 500 °C, preferably from 250 to 400 °C, more preferably from 280 - 350 °C, most preferably at temperature of 300-330 °C. The hydrodeoxygenation may take place at reaction conditions comprising a pressure in the range from 0.1 to 20 MPa, preferably from 0.2 to 8 MPa.

Preferably, the weight hourly space velocity (WHSV) in the hydrodeoxygenation reaction a is in the range from 0.5 to 3.0 h⁻¹, more preferably from 1.0 to 2.5 h⁻¹, most preferably from 1.0 to 2.0 h⁻¹. Preferably, H₂ flow is in the range from 350 to 900 nl H₂/I feed, more preferably from 350 to 750, most preferably from 350 to 500, wherein nl H₂/I means normal liters of hydrogen per liter of the feed into the HDO reactor, in the presence of a hydrodeoxygenation catalyst.

Hydrotreating may comprise hydrodeoxygenation and hydroisomerisation, simultaneously or in sequence. In a specific embodiment, hydrodeoxygenation and hydroisomerisation are performed simultaneously using a NiW catalyst. When conducted in sequence, hydrotreating comprises first hydrodeoxygenation, and then hydroisomerisation.

When the pretreated feedstock is first subjected to HDO, the liquid product recovered therefrom is next subjected to hydroisomerisation to produce branched paraffinic hydrocarbons. The hydroisomerisation is conducted in the presence of an hydroisomerisation catalyst containing a support, a metal and a further catalyst material, said support selected from Al₂O₃ and SiO₂, and said metal selected from Pt and Pd and Ni, and said further catalyst material selected from SAPO-11, SAPO-41, ZSM-22, ZSM-23, ZSM-12, ZSM-48, ZSM-5, beta zeolites and mixtures thereof. Such catalyst materials have been found to deactivate in the presence of organic nitrogen compounds in the hydroisomerisation reaction, which deactivation may be prevented by specific pretreatment selection according to the present invention.

The hydroisomerisation step is preferably performed at a temperature from 250 to 400 °C, more preferably from 280 to 370 °C, most preferably from 300 to 350 °C. The hydroisomerisation may take place at reaction conditions comprising a pressure, which preferably is from 1 to 6 MPa, more preferably from 2 to 5 MPa, most preferably from 2.5 to 4.5 MPa.

The hydrodeoxygenation may take place at reaction conditions comprising a WHSV preferably from 0.5 to 3 h⁻¹, more preferably from 0.5 to 2 h⁻¹, most preferably from 0.5 to 1 h⁻¹, and H₂ flow as in-liter H₂/liter feed, preferably from 100 to 800, more preferably from 200 to 650, most preferably from 350 to 500.

The isomerisation treatment is a step which predominantly serves to isomerize at least part of the hydrodeoxygenated raw material. That is, while most thermal or catalytic conversions (such as HDO) result in a minor degree of isomerisation (usually less than 5 wt-%), the isomerisation step leads to a significant increase in the content of i-paraffins.

During the conventional hydroisomerisation some cracking may be present. Therefore, the selection of the catalyst and optimisation of reaction conditions are always important during the isomerisation step. Due to cracking during isomerisation, renewable diesel and renewable paraffinic gasoline components may be formed.

Hydroisomerisation can be carried out in a conventional hydroisomerisation unit. Hydrogen is added into the hydroisomerisation step. Both the hydrodeoxygenation step and hydroisomerisation step may be conducted in the same reactor in different reactor beds, or even in the same reactor bed.

For the feedstock comprising triacylglycerols suitable for hydrotreatment into branched paraffinic hydrocarbons, a wide range of pretreatments with great variety of modifications are available in the field as such. It is also known that two or more feedstock pretreatments may be conducted in sequence. According to preferred embodiments, the feedstock pretreatment is, or the pretreatments are, selected from degumming, heat treatment, acid treatments, such as strong acid treatment, filtration, bleaching with adsorbent or any combination thereof. With the present process for selecting a pretreatment based on identification of an organic nitrogen compound, the hydrotreatment catalysts may best be protected against deactivation and the catalyst life extended.

Hence, herein is provided a process for pretreating renewable feedstock comprising triacylglycerols and one or more organic nitrogen compounds, wherein said process comprises the steps,
(i) collecting at least one sample of said renewable feedstock and purifying said sample by removal of triacylglycerols, to obtain a purified sample;
(ii) analyzing said purified sample to provide data on at least one organic nitrogen compound in said renewable feedstock;
(iii) identifying at least one organic nitrogen compound(s) based on said data;
(iv) selecting based on said identified organic nitrogen compound(s) at least one pretreatment step capable of reducing or removing from the feedstock said identified organic nitrogen compound;
(v) subjecting the renewable feedstock to the pretreatment(s) selected in step (iv) to obtain a pretreated renewable feedstock suitable for hydrotreatment into branched paraffinic hydrocarbons, said pretreated renewable feedstock having a content of the organic nitrogen compound(s) lower than that in the sample collected in step (i).

The analysis provides identification of the organic nitrogen compounds and linking them to pretreatment processes capable of reducing the content of said organic nitrogen compound. With identification is here referred to identification of an organic nitrogen compound as to its nitrogen containing functionality or as a specific compound based on a library database. When referring to lowering or reducing the content of said organic nitrogen compound(s) a man skilled in the art contemplates that the quantitative result is dependent on a few factors, such as the analytical method, the initial concentration and interplay of the organic nitrogen compounds, and therefore not directly assessable in numerical terms. However, when referring to the renewable feedstock having a content of the organic nitrogen compound(s) lower than that in the sample collected in step (i), this condition is satisfied when the difference in said contents is significant in relation to the site precision of the analysis provider.

Further, the method has enabled discovery of novel organic nitrogen compounds previously unknown. The appropriate sample purification from triacylglycerols and the subsequent analysis have enabled such discoveries.

Among the newly detected compounds, are sulfanyl fatty amides C18H37O3NS, C19H39O3NS, C20H41O3NS, C21H43O3NS, C22H45O3NS, C22H43O3NS, and C24H49O3NS, amino acid dimers Cyclo(Ile/Leu-[-2H]Pro) C11H16O2N2, Cyclo(Pro-Trp) C16H17O2N3, Cyclo([-2H]Pro-Val) C10H14O2N2, Cyclo(Ile/Leu-Val) C11H20O2N2, primary fatty amides C17:1-amide C17H33NO, C23:0-amide C23H47NO, C21:0-amide C21H43NO, C21:1-amide C21H41NO, C8:0-amide C8H17NO, C20:0-amide C20H41NO, C22:0-amide C22H45NO, C22:1-amide C21H43NO, C14:1-amide, C14H27NO, C15:0-amide C15H33NO, C17:0-amide C17H35NO, C19:0-amide C19H39NO, C19:1-amide C19H37NO, C23:1-amide C23H45NO, C24:0-amide C24H49NO, nitriles Docosanenitrile C22H43N, and Tetracosanenitrile C24H47N, imides imide(C16:0-C5:1) C21H39O2N, imide(C18:0-C5:1) C23H43O2N, imide(C18:1-C5:1) C23H41O2N, imide(C14:0-C5:1) C19H35O2N, imide(C14:0-C6:1) C20H37O2N, imide(C14:0-Pro) C19H36O2N2, imide(C16:0-C5:1) C21H39O2N, imide(C16:0-C6:1) C22H41O2N, imide(C16:0-Pro) C21H40O2N2, imide(C18:0-C5:1) C23H43O2N, imide(C18:0-C6:1) C24H45O2N, imide(C18:0-Pro) C23H44O2N2, imide(C18:1-C5:1) C23H41O2N, imide(C18:1-Pro) C23H42O2N2, N-alkenyl amides Octadecenamide, N-(ethenyl)- C20H37ON, Octadecanamide, N-(ethenyl)-C20H39ON, Octadecenamide, N-allyl C21H39ON, Palmitamide, N-(ethenyl)-C18H35ON, Palmitamide, N-allyl C19H37ON, Tetradecanamide, N-(ethenyl)-C16H31ON, and secondary and tertiary amides Arom N fatty deriv (MW494, MW520, MW522), N-pentyl-C16:0-amide C21H41NO, N-phenylethyl-C17:0-amide C25H43NO, N-phenylethyl-C18:0-amide C26H45NO, N-phenylethyl-C18:1-amide C26H43NO, Phenyl-carbonyl-16:0-amide mw375 C24H41NO2, Phenyl-carbonyl-C18:0-amide Mw403 C26H45NO2, and Phenyl-carbonyl-C18:1-amide Mw401 C26H43NO2.

According to an embodiment, the removal of triacylglycerols from the sample in step (i) is conducted by solid phase extraction or by flash chromatography providing fractions of the purified sample. The present inventors have found that triacylglycerols, which interfere with analysis of organic nitrogen compounds can be removed by solid phase extraction or by flash chromatography providing such fractions of the purified sample which enable analysis by mass spectrometry. Removal of triacylglycerols by flash chromatography has shown particularly good results in the conducted experiments.

According to preferred removal of triacylglycerols, flash chromatography comprises a column, such as such as amino, silica or diol column, and increasing polarity of solvents during the extraction. Preferably, said column is a silica column. Flash chromatography provides fractions, from which the organic nitrogen compound(s) can be identified and the matrix no longer overlaps with the most interesting peaks. Considering the role of the triacylglycerols as the sample matrix and organic nitrogen compounds as minor components, even traces, the separation by elution becomes even more relevant for detection.

According to a preferred embodiment, heptane is used as the first solvent for flash chromatography. Polarity gradient is needed to shorten the analysis time.

The analysing in step (ii) comprises use of GC-HRMS in detection of the organic nitrogen compound(s) from the purified sample or a fraction thereof. The matrix tends to vail the relevant area where the organic nitrogen compound peaks appear in the chromatogram and mass spectrum of the GC-HRMS if not removed. The detection by GC-HRMS is plausible only for samples free from triacylglycerols.

Considering the gas chromatography, the nitrogen compounds are more polar than the typical hydrocarbon compounds and therefore the columns that are generally used in the hydrocarbon analytics are not fully applicable. The column length also plays a role in the separation. With longer columns, higher chromatographic resolution can be obtained compared to shorter columns. However, in this case the compounds of interest have rather low volatility, and therefore long columns cannot be used. Hence, 15 m columns with slightly polar stationary phase, provided excellent separation. Further, good heat resistance was required of the column.

For the present experiments, three columns with different stationary phases were selected for the laboratory tests. The columns selected for the tests had slightly polar phases and were able to tolerate high temperatures. The tested columns were: RTX-200MS, Crossbond trifluoropropylmethyl siloxane, 15 m, 0.25 mm ID,0.25 uM df, ZB-35HT Inferno, Crossbond 35% Phenyl, 65% Dimethylpolysiloxane, 15m, 0.25 mm ID, 0.25 uM df, TR-50MS, Crossbond 50% Phenyl polysilphenylene-siloxane, 15 m 0.25 mm ID, 0.25 uM df.

According to a specific embodiment, a high resolution, mass accuracy and sensitivity MS, such as Q Exactive MS may be used. The acquisition method is then rather based on full scanning of the mass range of the mass spectrum of the target nitrogen compounds, than on tandem mass (MS-MS) approach that is often chosen upon designing a targeted mass spectrometric method. The ion source and analyzer conditions may be optimized to enable the analysis of nitrogen impurities with a broad boiling point range eluting from the gas chromatography. Electron ionisation may be chosen for ionisation method given its high sensitivity, and ability to produce distinctive fragment ions from the analytes.

The resulting MS-data-files are processed in software. An automated target screening master method utilizing a substantial set of parameters provides automated acquisition, detection, identification and reporting of the organic nitrogen compounds in the sample. The compound specific identifiers stored in the database may be selected from GC retention time, compound name, chemical formula, molecular structure, CAS number, target ion accurate mass, confirmation ion and fragment ion accurate masses and ion ratios. To correct the shifts in the gas chromatographic retention times, and to carry out an estimation of the quantities of the nitrogen impurity compounds, an internal standard (such as stearyl stearate) may be employed.

According to an embodiment, the compound specific identifiers of various organic nitrogen components can be stored in a database. Said database provides basis for comparison of data obtained of an unknown compound from a sample to data on compounds already identified and stored in a database. The following new compound groups can be analysed with the presented method: diketopiperazines (amino acid dimers), imides (fatty-amino acid derivatives), sulfanyl fatty amides, N-alkenyl-fatty-amides, fatty acid amides and fatty acid nitriles.

Identification in step (iii) comprises using an automated target screening master method including a library database with compound-specific identifiers. Several different compounds or groups of compounds can be identified from the purified sample.

The compounds identified so far are compiled in tables 1 and 2. They provide an example of compounds for which data can be stored and used as a library database.

**Table 1. Organic nitrogen compounds identified in samples; amides.**

| **Secondary and tertiary amides** | **N-alkenyl amides** | **Imides** |
|---|---|---|
| N,N-Dimethyl-C16:0*-amide | Tetradecanamide, N-(ethenyl)- | 2:lmide(C16:0-C5:1) |
| N-phenylethyl-C16:0-amide | Palmitamide, N-(ethenyl)- | 2:Imide(C18:1-C5:1) |
| N-phenylethyl-C18:1-amide | Octadecanamide, N-(ethenyl)- | 2:lmide(C18:0-C5:1) |
| N-phenylethyl-C18:0-amide | Octadecenamide, N-(ethenyl)- | Imide(C14:0-Pro) |
| Arom N fatty acid deriv (Mw494) | Palmitamide, N-allyl | Imide(C16:0-Pro) |
| Arom N fatty acid deriv (Mw520) | Octadecenamide, N-allyl | Imide(C18:1-Pro) |
| Arom N fatty acid deriv (Mw522) | Stearamide, N-allyl | Imide(C18:0-Pro) |
| N-methyl-C16:0-amide | | Imide(C14:0-C5:1) |
| N-pentyl-C14:0-amide | | Imide(C14:0-C6:1) |
| Pyrrolidine-C14:0-amide | | Imide(C16:0-C5:1) |
| N-butyl-C16:0-amide | | Imide(C16:0-C6:1) |
| N-Methyl-C18:0-amide | | Imide(C18:1-C5:1) |
| N,N-dimethyl-C18:0-amide | | Imide(C18:0-C5:1) |
| N-pentyl-C16:0-amide | | Imide(C18:0-C6:1) |
| N-butyl-C18:0-amide | | |
| Pyrrolidine-C16:0-amide | | |
| N-pentyl-C18:0-amide | | |
| Pyrrolidine-C18:0-amide | | |
| N-phenylethyl-C17:0-amide | | |
| Phenyl-carbonyl-16:0-amide (mw375) | | |
| Phenyl-carbonyl-C18:1-amide (Mw401) | | |
| Phenyl-carbonyl-C18:0-amide (Mw403) | | |

| | | |
|---|---|---|
| *Acyl-group designation CX:Y; X is the number of carbon atoms, and Y is the number of double bonds in the corresponding acyl-group. Acyl group is derived from the fatty acid precursor of the molecule. For example, C16:0 corresponds to an acyl-group with sixteen carbon atoms and zero double bond, and it is derived from palmitic acid. | | |

**Table 2. Organic nitrogen compounds identified in samples, diketopiperazines, nitriles, sulfanyl fatty amides and primary fatty amides.**

| **Diketopiperazines** | **Nitriles** | **Sulfanyl fatty amides** | **Primary amides** |
|---|---|---|---|
| Cyclo(Ala-Pro) | Octadecanenitrile | C20H41O3NS | C17:1-amide |
| 2:Cyclo(Pro-Val) | Tetradecanenitrile | C22H43O3NS | C23:0-amide |
| 3:Cyclo(Ile/Leu-Pro) | Hexadecanenitrile | C18H37O3NS | C21:0-amide |
| 2:Cyclo(Phe-Pro) | 9-octadecenenitrile | 2:C19H39O3NS | C21:1-amide |
| Cyclo(Phe-Pro) | Eicosanenitrile | 3:C19H39O3NS | Octanamide |
| Cyclo(Ala-Val) | Docosanenitrile | C19H39O3NS | C20:0-amide |
| Cyclo(Gly-Val) | Tetracosanenitrile | 3:C21H43O3NS | C22:0-amide |
| 2:Cyclo(Ala-Ile/Leu) | | 2:C21H43O3NS | C22:1-amide |
| Cyclo(Ala-Ile/Leu) | | C21H43O3NS | C14:0-amide |
| Cyclo(Gly-Ile/Leu) | | C22H45O3NS | C15:0-amide |
| Cyclo(Ile/Leu-Val) | | C24H49O3NS | C17:0-amide |
| Cyclo(Pro-Val) | | | C19:0-amide |
| Cyclo([-2H]Pro-Val) | | | C19:1-amide |
| Cyclo(Ile/Leu-Pro) | | | C23:1-amide |
| Cyclo(Ile/Leu-[-2H]Pro) | | | C24:0-amide |
| 2:Cyclo(Ile/Leu-Pro) | | | 2:C17:0-amide |
| 2:Cyclo(Ile/Leu-[-2H]Pro) | | | 2:C17:1-amide |
| 2:Cyclo(Ala-Phe) | | | 2:C15:0-amide |
| Cyclo(Ala-Phe) | | | |
| Cyclo(Ile/Leu-Ile/Leu) | | | |
| Cyclo(Gly-Phe) | | | |
| Cyclo(Phe-Val) | | | |
| 2:Cyclo(Leu-Phe) | | | |
| Cyclo(Leu-Phe) | | | |
| Cyclo(Phe-[-2H]Pro) | | | |
| Cyclo([-2H]Phe-Pro) | | | |
| 2:Cyclo(Phe-Phe) | | | |
| Cyclo(Phe-Phe) | | | |
| Cyclo(Pro-Trp) | | | |
| 2:Cyclo(Pro-Trp) | | | |

In tables 1 and 2 the compounds are grouped by their relevant nitrogen containing functionalities. It is understood by a man skilled in the art, that such compounds may be referred to by different nomenclature depending on the point of view. Nevertheless, the group titles in the present tables refer to the common functional group as identity shared by each and every member of the respective group. The variables (Rₓ) are then characterized around this common functional group. The groups are next discussed explaining the functional group and the variables therein.

As used herein N-alkenyl amides share the functional amide group, which is substituted by one unsaturated hydrocarbon and acylic fatty acid residue. The general structure and the structural formula of N-allyl-palmitamide as a specific example are given in scheme 1 below.

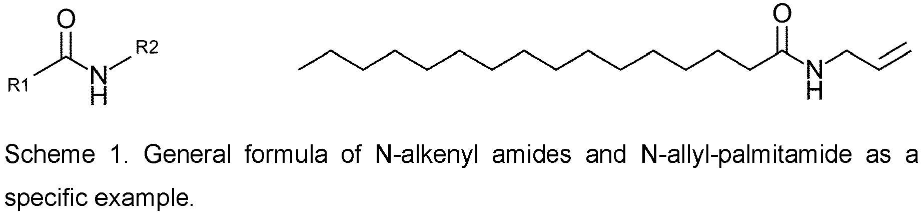

In the general formula, each R₁ is a fatty acid residue, referred to following normal fatty acid nomenclature, such as palmitic acid or octadecenoic and each R₂ is an alkenyl substituent, such as ethenyl or allyl. In the specific example compound, N-allyl-palmitamide, R₁ is a palmitic acid residue C₁₅H₃₁, and R₂ is allyl i.e. 2-propenyl. Following the nomenclature preferred in organic chemistry, this molecule having molecular formula C₁₉H₃₇NO is named as N-prop-2-enylhexadecanamide. However, it is also known as N-allyl palmitoylamide, N-Allyl-palmitamide, hexadecanamide,N-2-propenyl, palmitoylallylamide, hexadecanoic acid allylamide, N-allyl-palmitamide, N-(2-propenyl)hexadecanamide.

Correspondingly, the imides as used in table 1, are composed of acylic residues of fatty acid and amino acid, which are substituted to the same amino group. The general structure and the structural formulas of imide(C16:0-C5:1) and imide(C16:0-Pro) as specific examples are given in scheme 2 below.

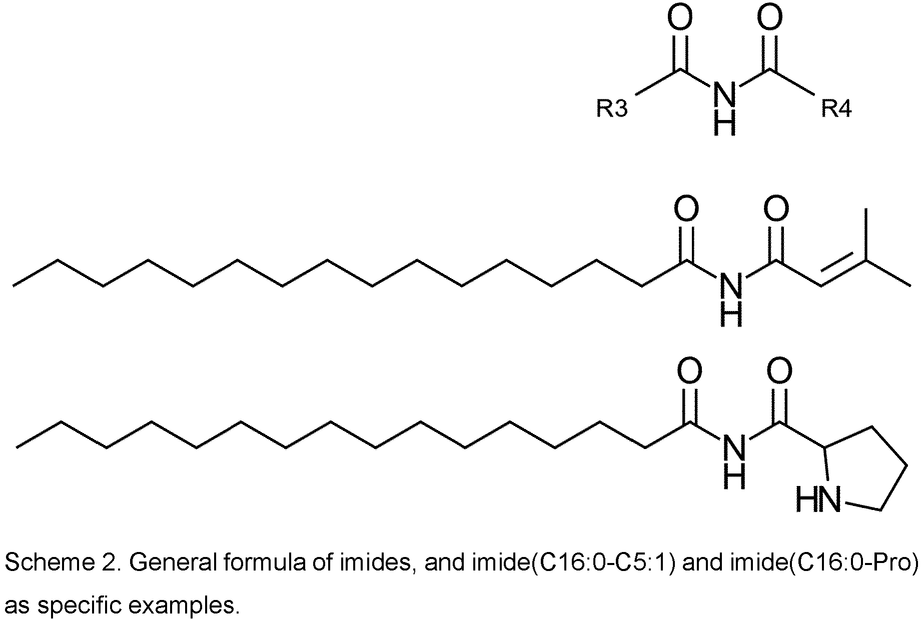

In the general formula, each R3 is a fatty acid residue, referred to following normal fatty acid nomenclature, such as palmitic acid or octadecenoic acid, and each R4 is an amino acid residue, such as a residue of an intact amino acid, or an residue of an alkenic derivative of an amino acid. In the specific example compound, imide(C16:0-C5:1), R3 is a palmitic acid residue C15H31, and R4 is an isopropenyl group that is presumably a residue of de-ammoniated Valine amino acid. In the other specific example compound, imide(C16:0-Pro), R3 is a palmitic acid residue C15H31, and R4 is a Proline amino acid residue C4H8N. Following the nomenclature preferred in organic chemistry, the imide(C16:0-C5:1) molecule having the chemical formula C21H39O2N is named as N-(3-methyl-2-butenoyl)-palmitamide, and the imide(C16:0-Pro) molecule is named as N-hexadecanoyl-prolinamide.

Secondary and tertiary amides as used in table 1 share the functional amide group, which is substituted by a fatty acid residue and one cyclic, linear or branched aliphatic hydrocarbon, or two linear or branched aliphatic hydrocarbons. The linear or branched aliphatic hydrocarbons may contain aromatic or carbonyl substituents. The general structure and the structural formulas of N-phenylethyl-C16:0-amide and Pyrrolidine-C16:0-amide as specific examples are given in scheme 3 below.

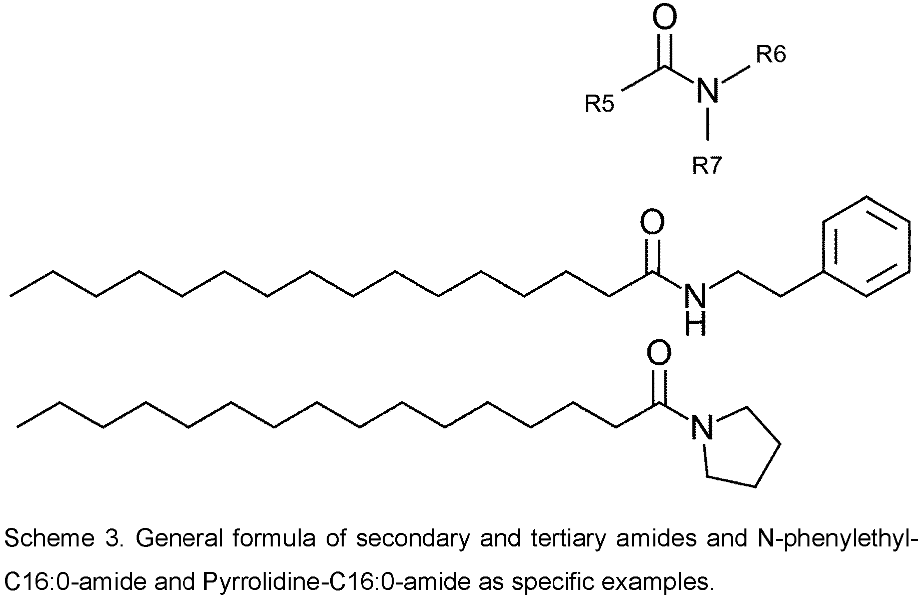

In the general formula, each R5 is a fatty acid residue, referred to following normal fatty acid nomenclature, such as palmitic acid or octadecenoic acid. R6 is linear or branched aliphatic hydrocarbon that may contain aromatic or carbonyl substituents. R7 is a hydrogen atom (in secondary amides), or linear or branched aliphatic hydrocarbon (in tertiary amides) which may contain aromatic or carbonyl substituents. R6 and R7 together can also represent a same linear or branched aliphatic hydrocarbon forming a cyclic structure with the ends of the hydrocarbon chain substituting the same nitrogen atom. In the specific example compound, N-phenylethyl-C16:0-amide, R5 is a palmitic acid residue C15H31, R6 is a phenylethyl-group, and R7 is a hydrogen atom. In the specific example compound Pyrrolidine-C16:0-amide, R5 is a palmitic acid residue C15H31, and R6 and R7 are the ends of the same linear C4H8 hydrocarbon chain. Following the nomenclature preferred in organic chemistry, the molecule having chemical formula C24H41NO is named as N-phenylethyl-palmit-amide, but is also known with synonym such as N-(2-Phenylethyl)hexadecanamide, and the molecule having chemical formula C20H39NO is named as hexadecanoic acid, pyrrolidide.

Nitriles as used in table 2, are composed of alkyl residue of fatty acid and nitrile group. The general structure and the structural formula of hexadecane nitrile as a specific example are given in scheme 4 below.

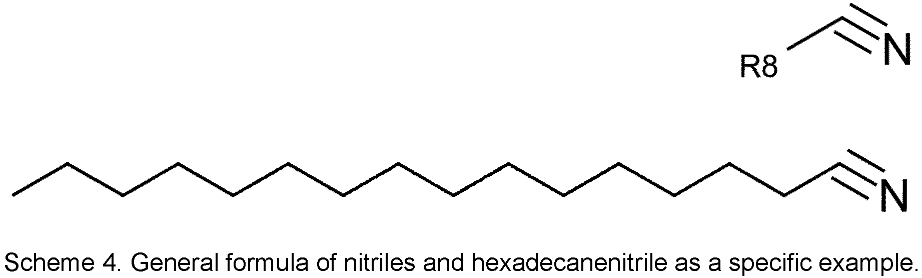

In the general formula, each R8 is an alkyl residue of fatty acid, referred to following normal fatty acid nomenclature, such as palmitic acid or octadecenoic acid. In the specific example compound, hexadecane nitrile, R8 is a palmitic acid residue C15H31, which is substituted to a nitrile group. Following the nomenclature preferred in organic chemistry, the molecule having chemical formula C16H31N is named as hexadecane nitrile, but has also synonyms such as palmitonitrile, 1-cyanopentadecane and palmitic acid nitrile.

Diketopiperazines, as used in table 2, are cyclic dipeptides of two amino acids. They share the diketopiperazine basic structure, which contain substituents that are dependent from the respective amino acids composing the molecule. The general structure and the structural formula of Cyclo(Ala-Phe) as a specific example are given in scheme 5 below.

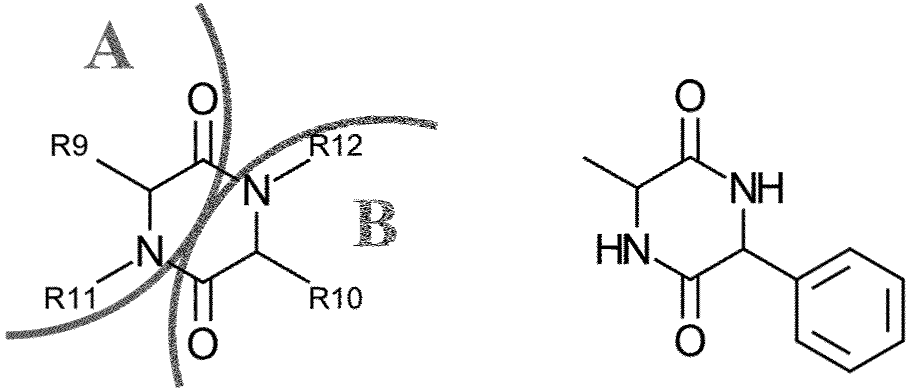

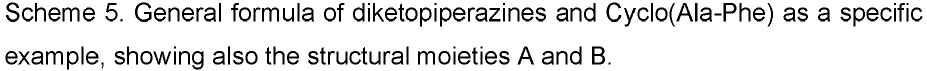

In the general formula, the R9-R12 substituents in the diketopiperazine ring are dependent on the amino acid derived structural moieties A and B, that compose the molecule. The structural moieties A and B are derived from the following amino acids: alanine, proline, valine, isoleucine, leucine, phenylalanine, glycine, dehydro-proline, or tyrosine. In the specific compound Cyclo(Ala-Phe), A is derived from alanine, and B from phenylalanine. Following the nomenclature preferred in organic chemistry, the molecule having chemical formula C12H14N2O2 is named as Cyclo(Ala-Phe) but is also known with synonyms such as 2,5-Piperazinedione, 3-methyl-6-(phenylmethyl)-, and 3-Benzyl-6-methyl-2,5-piperazinedione.

Sulfanyl fatty amides, as used in table 2, are reaction products of fatty acid with methionine amino acid resulting in amide that has been decarboxylated and oxygenated adding the sulfone functionality to the molecule. The general structure and the structural formula of a compound with chemical formula C20H41O3NS as a specific example are given in scheme 6 below.

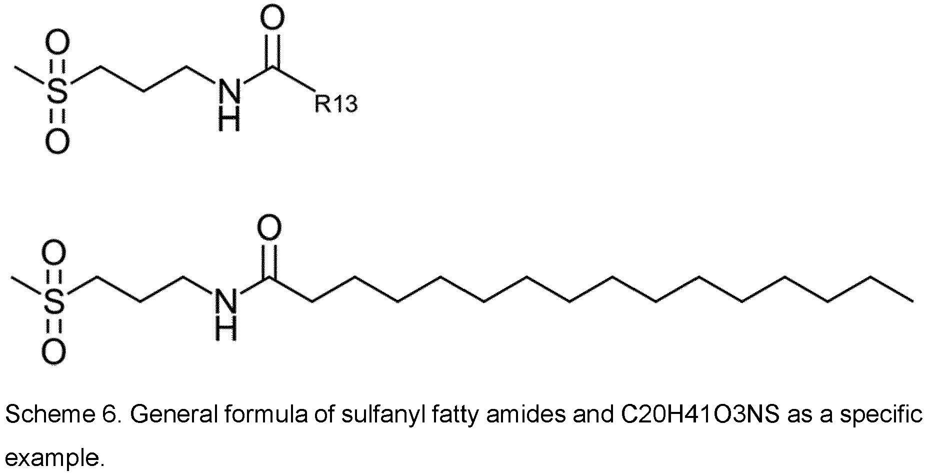

In the general formula, each R13 is an alkyl residue of fatty acid, referred to following fatty acid normal nomenclature, such as palmitic acid or octadecenoic acid. Following the nomenclature preferred in organic chemistry, the molecule having chemical formula C20H41O3NS is named as N-(3-((S-methylsulfanyl)propyl)-palmitamide.

Primary amides as used in table 2 share the functional amide group, which is substituted by an acylic fatty acid residue. The general structure and the structural formula of C22:0-amide as a specific example is given in scheme 7 below.

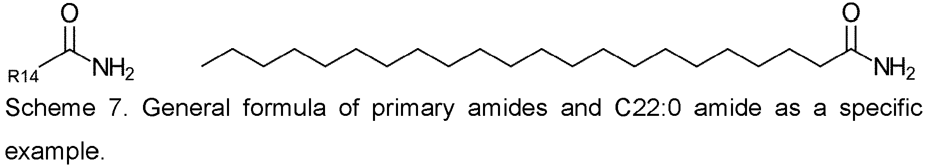

In the general formula, the R14 substituent is an alkyl residue of fatty acid, referred to following normal fatty acid nomenclature, such as palmitic acid or octadecenoic acid. Following the nomenclature preferred in organic chemistry, the molecule having chemical formula C22H45NO is named as docosanamide. The compound groups detected by GC-HRMS were in the experiments conducted identified as primary fatty acid amides, secondary fatty acid amides, tertiary fatty acid amides, N-alkenyl amides, imides, diketopiperazines, nitriles or sulfur-containing fatty acid amides, such as sulfanyl fatty amides. The flash chromatography proved capable for such purification that also secondary fatty acid amides, tertiary fatty acid amides, N-alkenyl amides, imides, diketopiperazines, nitriles or sulfur-containing fatty acid amides, which could not be expected with analysis methods of prior art.

According to a second aspect outside of the present invention, herein is provided a use of a GC-HRMS analysis for identifying an organic nitrogen compound present in a sample of a renewable feedstock comprising triacylglycerols, the use further comprising based on said identifying, selection of a pretreatment reducing the organic nitrogen compound content of said renewable feedstock. As explained in detail in relation to the present process, the GC-HRMS analysis provides data for identifying the organic nitrogen compounds of the feedstock.

According to a preferred embodiment of said use, said sample is purified prior to GC-HRMS analysis by removal of triacylglycerols, preferably by flash chromatography.

The use may further comprise treating said renewable feedstock with at least one pretreatment to obtain pretreated renewable feedstock. The pretreatment selected based on said identification provides a pretreated renewable feedstock, wherein the content of said organic nitrogen compound identified is lowered. In other words, the feedstock may be subjected to a selective purification. The pretreatment may be selected from various types of degumming, heat treatment, acid treatments, such as strong acid treatment, filtration, bleaching with adsorbent available or any modifications or combinations thereof. According to an embodiment, two or more pretreatments are conducted in sequence, which ensures the removal of two or more detrimental organic nitrogen compounds.

### EXPERIMENTAL

### Example 1. Elution method

The equipment used was CombiFlash NextGen 300+ (Teledyne ISCO).

In the extraction method four solvents were used; heptane, ethyl acetate, isopropanol and methanol. For obtaining the optimum detection in the ELSD, the spray chamber temperature was set to 40 °C instead of the default setting of 30 °C for normal phase separations. The drift tube temperature was set to 60 °C. The detection sensitivity was set to high, peak width to 30 sec and the threshold to 0.02 v.

The specific properties of the samples of interest were taken into account by first separating the main triglyceride portion, and after that part the unknown analytes. In addition, the flow rate and sample amount were varied.

The flow rate and the gradient program have a combined effect on the resolution. The flow rates of 35 ml/min and 40 ml/min were tested for the 24 g silica Gold columns, for smaller columns in preliminary testing flow rate of 10 ml/min was used. The run time in total was about 27 minutes.

The sample was injected in heptane, and for the non-polar fraction 10 vol-% EtOAc in heptane was used as the elution solvent. An example of the gradient method contained Heptane/EtOAc 10 % 7 min; EtOAc 5 min; EtOAc/IPA 0-100 % 4 min; IPA/MeOH 70 -100 % 3 min; MeOH 1 min; EtOAc/IPA 100-50 % 3 min; Heptane/EtOAc 50 % 2 min; Heptane/EtOAc 50-10 % 2 min. Afterwards, the solvent fractions with unknown analytes were evaporated.

The method was found to provide pure fractions for GC-Orbitrap analysis. Obtaining many fractions with "few" components or at least as little background as possible enabled GC-Orbitrap method development and creation of libraries. With the developed method in addition to the first mainly triacylglycerols containing fraction, a range of 4-8 fractions can be collected depending on the sample and its components.

### Example 2. Orbitrap

The equipment used was Thermo Fisher Scientitic Q Exactive GC Orbitrap (commercially available from Thermo Fisher Scientitic).

The nitrogen compounds are more polar than the typical hydrocarbon compounds and therefore the columns that are generally used in the hydrocarbon analytics are not fully applicable. As to the column length, the compounds of interest are rather polar and of low volatility and therefore 15 m columns were tested. The column had to have slightly polar phases and be able to tolerate high temperatures and therefore Restec: RTX-200MS, Crossbond trifluoropropylmethyl siloxane, 15 m, 0.25 mm ID, 0.25 uM df was used.

The GC method employed a split/splitless inlet with split ratio between 1:100 to 1:10. The GC oven was initially held at 25-100 °C for 0.5-5 minutes, and then ramped up to 200-320 °C with a temperature ramp of 5-20 °C/min. GC-inlet and GC-MS interface was kept at constant temperature of 250-320 °C through the analysis.

The GC-method was finalised by adding a carrier gas flow ramp to ensure that all compounds are flushed out from the columns. The initial flow (2.8 ml/min) was kept for the first 24 min after which the flow was ramped to 4.5 ml/min.

Given the high resolution and sensitivity of the Q Exactive MS, the acquisition method was rather based on full scanning of the mass range of the mass spectrum of the target nitrogen compounds, than on tandem mass (MS-MS) approach that is often chosen upon designing a targeted mass spectrometric method. The ion source and analyzer conditions were optimized to enable the analysis of nitrogen impurities with a broad boiling point range eluting from the gas chromatography. Electron ionisation was the choice of ionisation method given its high sensitivity, and ability to produce distinctive fragment ions from the analytes, that is a prerequisite for the automatic identification employed in the method. High resolution of the MS (20 000-120 000) was used in order to ensure full separation and high mass accuracy (<2-10 ppm) of the closely located m/z values of analyte molecular and fragment ions originating from the complex nature of the samples. Internal mass-axis calibration with column bleed ions was utilized. Real samples prepared by the pretreatment method, and various standards (e.g. perfluorotributylamine, capsaicin, caffeine, stearyl stearate, fatty acid methyl esters) were utilized in the development and optimisation of the MS-method. The mass spectrometric parameters were as follows: electron ionisation energy of 20-100 eV, mass range of 30-1500 m/z, solvent delay of 0.1-6 min, run time of 24-80 min, and ion source temperature of 200-320 °C.

The resulting MS-data-files were processed in Thermo TraceFinder General GC software. An automated target screening master method utilizing a substantial set of parameters was developed for automated acquisition, detection, identification and reporting of the target nitrogen compounds in the sample. Core part of the method consisted of the databases which contained the compound specific identifiers e.g. GC retention time, compound name, chemical formula, molecular structure, CAS number, target ion accurate mass, confirmation ion and fragment ion accurate masses and ion ratios, and fragment ion accurate masses, which are exemplified for a Cyclo(Phe-Pro) diketopiperazine respectively as follows: 15.7 min; Cyclo(Phe-Pro); C14H16N2O2; Pyrrolo[1,2-a]pyrazine-1,4-dione, hexahydro-3-(phenylmethyl)-; 14705-60-3; 125.0709; 91.05423 40.38796%; 153.0659 69.1742%; 70.06513 34.53461%; 244.1206 9.77327%; 91.05423; 153.0659; 70.06513; 244.1206. The method also employed stearyl stearate as an internal standard to correct the shifts in the gas chromatographic retention times.

Peak detection and identification settings in the Tracefinder master method were optimized mainly by using real samples. The parameter optimisation was a trade-off between accurate identification of the nitrogen containing analytes, and the final analytical sensitivity of the method. An ICIS algorithm was tested to be most suitable for the peak detection and was chosen for the final method.

### Example 3. Analysis method for organic nitrogen compounds in an example feedstock comprising triacylglycerols, process intermediates and products

A process for analysis of different nitrogen compounds at molecular level was performed. The method consists of GC-HRMS analysis and data processing step in which a database of 120 nitrogen compounds was screened. This method allowed one to follow the effectiveness of different preprocessing steps to different nitrogen compounds or compound classes. In this example, two organic nitrogen compounds were followed in the feed of animal fat and through six different pretreatment procedures (Table 3). In Table 3, the amounts are presented as absolute (ppm) and relative (%) values. The relative value is calculated comparing the amounts of compounds in the feed and treated product.

**Table 3. The amount of two organic nitrogen compounds in the feed and after six different pretreatment processes.**

| Imide | Imide (C16:0-Pro) | | Diketopiperazine Cyclo(Pro-Val) | | Total N (ref) | |
|---|---|---|---|---|---|---|
| Sample | N [ppm] | N relative to feed % | N [ppm] | N relative to feed % | N [ppm] | N relative to feed % |
| Feed AF1993 | 23 | 100 | 6 | 100 | 980 | 100 |
| Pretreatment 1 | 26 | 111 | 6 | 100 | 930 | 95 |
| Pretreatment 2 | 13 | 57 | 4 | 67 | 720 | 73 |
| Pretreatment 3 | 22 | 96 | 7 | 117 | 1000 | 102 |
| Pretreatment 4 | 1 | 4 | 3 | 50 | 1100 | 112 |
| Pretreatment 5 | 0 | 0 | 1 | 17 | 680 | 69 |
| Pretreatment 6 | 0 | 0 | 7 | 117 | 1000 | 102 |

The present process enables one to follow the removal of individual organic nitrogen compounds compared to the feed. As can be seen in Table 3 the Pretreatments 4, 5 and 6 removed the imide effectively. The experiments conducted according to the present process also demonstrated that the diketopiperazine behaved differently compared to the imide. Pretreatment 4 only halved the amount of diketopiperazine and Pretreatment 6 did not have any effect on the diketopiperazine. The best removal for these two compounds was noticed after the Pretreatment 5. This treatment reduced the amounts of Imide and diketopiperazine to 4% and 17%, respectively.

The state of the art analysis for such samples would have been the total nitrogen analysis. Table 3 also shows that such an approach would not have given a clear picture of what actually happens during the treatment steps. The amount of total nitrogen remained the same after the Pretreatment 4 and 6 treatments even though a component level examination shows clear differences. Actually, combining information from both analyses would indicate that even though some compounds are removed there are probably other nitrogen compounds forming in the process. The present analysis process provides novel means for identifying organic nitrogen compounds in a sample, such as a renewable feedstock sample, comprising triacylglycerols. Said identification allows selection of an effective pretreatment for removal of said specific organic nitrogen compound from said renewable feedstock comprising triacylglycerols. In case several organic nitrogen compounds are identified in a sample, a sequence of pretreatments can be designed for selective removal of said several organic nitrogen compounds. Various embodiments have been presented. It should be appreciated that in this document, words comprise, include and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the scope of the claims.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A process for pretreating renewable feedstock comprising triacylglycerols and one or more organic nitrogen compounds, wherein said process comprises the steps,
(i) collecting at least one sample of said renewable feedstock and purifying said sample by removal of triacylglycerols, to obtain a purified sample;
(ii) conducting an analysis of said purified sample to provide data on at least one organic nitrogen compound in said renewable feedstock;
(iii) identifying at least one organic nitrogen compound(s) using said data;
(iv) selecting based on the identified organic nitrogen compound(s) at least one pretreatment step capable of reducing or removing from the renewable feedstock said identified organic nitrogen compound;
(v) subjecting the renewable feedstock to at least one pretreatment(s) selected in step (iv) to obtain a pretreated renewable feedstock suitable for hydrotreatment into branched paraffinic hydrocarbons, said pretreated renewable feedstock having a content of the organic nitrogen compound(s) lower than that in the sample collected in step (i).

2. The process according to claim 1, wherein the removal of triacylglycerols from the sample in step (i) is conducted as solid phase extraction or as flash chromatography providing fractions of the purified sample.

3. The process according to claim 2, wherein flash chromatography comprises a column, such as such as amino, silica or diol column, and increasing polarity of solvents during the extraction.

4. The process according to any of preceding claims, wherein the analysis conducted in step (ii) comprises use of gas chromatography/high-resolution mass spectrometry (GC-HRMS) for detection of the organic nitrogen compound(s) from the purified sample or a fraction thereof.

5. The process according to claim 4, wherein identification in step (iii) comprises using an automated target screening master method including a library database with compound-specific identifiers.

6. The process according to any of preceding claims, wherein at least one organic nitrogen compound(s) is in step (iii) identified as a primary fatty acid amide, a secondary fatty acid amide, a tertiary fatty acid amide, a N-alkenyl amide, an imide, a diketopiperazine, a nitrile or a sulfur-containing fatty acid amide, preferably a secondary fatty acid amide, a tertiary fatty acid amide, a N-alkenyl amide, an imide, a diketopiperazine, a nitrile or a sulfur-containing fatty acid amide.

7. The process according to claim 1, wherein two or more feedstock pretreatments are conducted in sequence in step (v).

8. The process according to claim 1 or 7, wherein the feedstock pretreatment is, or the pretreatments are, selected from a degumming, heat treatment, acid treatment, such as strong acid treatment, filtration, bleaching with adsorbent or any combination thereof.

9. The process according to any of claims 1 - 8, wherein the pretreated renewable feedstock is subjected to hydrotreating in the presence of a catalyst selected from Pd, Pt, Ni, Co, Mo, Ru, Rh, W, or any combination of these, such as CoMo, NiMo, NiW, CoNiMo, on a support, wherein the support is preferably alumina and/or silica, and a liquid product is recovered.

10. The process according to any of claims 1 - 9, wherein hydrotreating comprises hydrodeoxygenation at reaction conditions comprising a temperature in the range from 100 to 500 °C, preferably from 250 to 400 °C, more preferably from 280 - 350 °C, most preferably at temperature of 300-330 °C, and/or a pressure in the range from 0.1 to 20 MPa, preferably from 0.2 to 8 MPa, and the hydrotreating product is a hydrodeoxygenation product.

11. The process according to claim 10, wherein hydrodeoxygenation product contains more than 99 wt% hydrocarbons and less than 0.3 wppm nitrogen, measured as elemental nitrogen.

12. The process according to any of claims 1 - 11, wherein the liquid product from hydrotreating is subjected to hydroisomerisation in the presence of an hydroisomerisation catalyst containing a support, a metal and a further catalyst material, said support selected from Al₂O₃ and SiO₂, and said metal selected from Pt and Pd and Ni, and said further catalyst material selected from SAPO-11 and SAPO-41 and ZSM-22 or ZSM-23, to produce branched paraffinic hydrocarbons.

13. The process according to claim 12, wherein the hydroisomerisation is performed at a temperature from 250 to 400 °C, more preferably from 280 to 370 °C, most preferably from 300 to 350 °C, and/or at a pressure from 1 to 6 MPa, preferably from 2 to 5 MPa, more preferably from 2.5 to 4.5 MPa.

## Patentansprüche

1. Verfahren zur Vorbehandlung von erneuerbarem Einsatzmaterial, umfassend Triacylglycerole und eine oder mehrere organische Stickstoffverbindungen, wobei das Verfahren die Schritte umfasst
(i) Gewinnen zumindest einer Probe des erneuerbaren Einsatzmaterials und Reinigen der Probe durch Entfernen von Triacylglycerolen, um eine gereinigte Probe zu erhalten;
(ii) Durchführen einer Analyse der gereinigten Probe, um Daten über zumindest eine organische Stickstoffverbindung in dem erneuerbaren Einsatzmaterial bereitzustellen;
(iii) Identifizieren mindestens einer organischen Stickstoffverbindung unter Verwendung der Daten;
(iv) Auswählen mindestens, auf der Grundlage der identifizierten organischen Stickstoffverbindung(en), eines Vorbehandlungsschritts, der in der Lage ist, die identifizierte organische Stickstoffverbindung in dem erneuerbaren Einsatzmaterial zu verringern oder diese daraus zu entfernen;
(v) Unterziehen des erneuerbaren Einsatzmaterials mindestens einer in Schritt (iv) ausgewählten Vorbehandlung, um ein vorbehandeltes erneuerbares Einsatzmaterial zu erhalten, das für ein Hydrotreating (eine Hydrobehandlung) zu verzweigten paraffinischen Kohlenwasserstoffen geeignet ist, wobei das vorbehandelte erneuerbare Einsatzmaterial einen Gehalt an organischer(n) Stickstoffverbindung(en) aufweist, der niedriger ist als derjenige der in Schritt (i) gewonnenen Probe.

2. Verfahren nach Anspruch 1, wobei die Entfernung von Triacylglycerolen aus der Probe in Schritt (i) als Festphasenextraktion oder als Flash-Chromatographie durchgeführt wird, die Fraktionen der gereinigten Probe liefert.

3. Verfahren nach Anspruch 2, wobei die Flash-Chromatographie eine Säule, wie beispielsweise eine Amin-, Siliciumoxid- oder Diolsäule, umfasst und die Polarität der Lösungsmittel während der Extraktion erhöht wird.

4. Verfahren nach einem der vorstehenden Ansprüche, wobei die in Schritt (ii) durchgeführte Analyse die Verwendung von Gaschromatographie/ hochauflösender Massenspektrometrie (GC-HRMS) zum Nachweis der organischen Stickstoffverbindung(en) aus der gereinigten Probe oder einer Fraktion davon umfasst.

5. Verfahren nach Anspruch 4, wobei die Identifizierung in Schritt (iii) die Verwendung eines automatisierten Target-Screening-Master-Verfahrens umfasst, das eine Bibliotheksdatenbank mit verbindungsspezifischen Identifikatoren beinhaltet.

6. Verfahren nach einem der vorhergehenden Ansprüche, wobei in Schritt (iii) zumindest eine organische Stickstoffverbindung als ein primäres Fettsäureamid, sekundäres Fettsäureamid, tertiäres Fettsäureamid, N-Alkenylamid, Imid, Diketopiperazin, Nitril oder schwefelhaltiges Fettsäureamid, vorzugsweise als sekundäres Fettsäureamid, tertiäres Fettsäureamid, N-Alkenylamid, Imid, Diketopiperazin, Nitril oder schwefelhaltiges Fettsäureamid, identifiziert wird.

7. Verfahren nach Anspruch 1, wobei in Schritt (v) zwei oder mehr Vorbehandlungen des Einsatzmaterials nacheinander durchgeführt werden.

8. Verfahren nach Anspruch 1 oder 7, wobei die Vorbehandlung des Einsatzmaterials oder die Vorbehandlungen ausgewählt ist / sind aus einer Entschleimung (bzw. Auslaugen), einer Wärmebehandlung, einer Säurebehandlung, wie einer Behandlung mit einer starken Säure, einer Filtration, einem Bleichen mit einem Adsorptionsmittel oder einer beliebigen Kombination davon.

9. Verfahren nach einem der Ansprüche 1 bis 8, wobei das vorbehandelte erneuerbare Einsatzmaterial einem Hydrotreating in Gegenwart eines Katalysators unterzogen wird, ausgewählt aus Pd, Pt, Ni, Co, Mo, Ru, Rh, W oder einer beliebigen Kombination davon, wie etwa CoMo, NiMo, NiW, CoNiMo, auf einem Träger, wobei der Träger vorzugsweise Aluminiumoxid und/oder Siliciumoxid ist, und ein flüssiges Produkt gewonnen wird.

10. Verfahren nach einem der Ansprüche 1 bis 9, wobei das Hydrotreating eine Hydrodesoxygenierung unter Reaktionsbedingungen umfasst, die eine Temperatur im Bereich von 100 bis 500 °C, vorzugsweise von 250 bis 400 °C, noch bevorzugter von 280 bis 350 °C, am bevorzugtesten bei einer Temperatur von 300 bis 330 °C, und/oder einem Druck im Bereich von 0,1 bis 20 MPa, vorzugsweise von 0,2 bis 8 MPa, umfassen, und das Hydrotreating-Produkt ein Hydrodesoxygenierungsprodukt ist.

11. Verfahren nach Anspruch 10, wobei das Hydrodesoxygenierungsprodukt mehr als 99 Gew.-% Kohlenwasserstoffe und weniger als 0,3 Gew.-ppm Stickstoff, gemessen als elementarer Stickstoff, enthält.

12. Verfahren nach einem der Ansprüche 1 bis 11, wobei das flüssige Produkt aus dem Hydrotreating einer Hydroisomerisierung in Gegenwart eines Hydroisomerisierungskatalysators unterzogen wird, der einen Träger, einem Metall und einem weiteren Katalysatormaterial enthält, wobei der Träger ausgewählt ist aus Al₂O₃ und SiO₂, das Metall ausgewählt ist aus Pt und Pd und Ni und das weitere Katalysatormaterial ausgewählt ist aus SAPO-11 und SAPO-41 und ZSM-22 oder ZSM-23, um verzweigte paraffinische Kohlenwasserstoffe herzustellen.

13. Verfahren nach Anspruch 12, wobei die Hydroisomerisierung bei einer Temperatur von 250 bis 400 °C, vorzugsweise von 280 bis 370 °C, am bevorzugtesten von 300 bis 350 °C und/oder bei einem Druck von 1 bis 6 MPa, vorzugsweise von 2 bis 5 MPa, weiter bevorzugt von 2,5 bis 4,5 MPa durchgeführt wird.

## Revendications

1. Procédé de prétraitement d'une matière première renouvelable comprenant des triacylglycérols et un ou plusieurs composés organiques azotés, dans lequel ledit procédé comprend les étapes consistant à,
(i) recueillir au moins un échantillon de ladite matière première renouvelable et purifier ledit échantillon par élimination des triacylglycérols, afin d'obtenir un échantillon purifié ;
(ii) effectuer une analyse de l'échantillon purifié pour fournir des données sur au moins un composé azoté organique dans la matière première renouvelable ;
(iii) identifier au moins un ou plusieurs composés organiques azotés à l'aide de ces données ;
(iv) sélectionner, sur la base du ou des composés organiques azotés identifiés, au moins une étape de prétraitement capable de réduire ou d'éliminer de la matière première renouvelable ledit composé organique azoté identifié ;
(v) soumettre la matière première renouvelable à au moins un ou plusieurs prétraitements sélectionnés à l'étape (iv) pour obtenir une matière première renouvelable prétraitée convenant à l'hydrotraitement en hydrocarbures paraffiniques ramifiés, ladite matière première renouvelable prétraitée ayant une teneur en composé(s) organique(s) azoté(s) inférieure à celle de l'échantillon prélevé à l'étape (i).

2. Procédé selon la revendication 1, dans lequel l'élimination des triacylglycérols de l'échantillon à l'étape (i) est réalisée par extraction en phase solide ou par chromatographie flash, ce qui permet d'obtenir des fractions de l'échantillon purifié.

3. Procédé selon la revendication 2, dans lequel la chromatographie flash comprend une colonne, telle qu'une colonne d'amine, de silice ou de diol, et une polarité croissante des solvants au cours de l'extraction.

4. Procédé selon l'une des revendications précédentes, dans lequel l'analyse effectuée à l'étape (ii) comprend l'utilisation de la chromatographie en phase gazeuse/spectrométrie de masse à haute résolution (GC-HRMS) pour détecter le(s) composé(s) organique(s) azoté(s) de l'échantillon purifié ou d'une fraction de celui-ci.

5. Procédé selon la revendication 4, dans lequel l'identification à l'étape (iii) comprend l'utilisation d'une méthode principale de criblage automatisé de cibles comprenant une base de données de bibliothèques avec des identificateurs spécifiques de composés.

6. Le procédé selon l'une des revendications précédentes, dans lequel au moins un des composés organiques azotés est identifié à l'étape (iii) comme un amide d'acide gras primaire, un amide d'acide gras secondaire, un amide d'acide gras tertiaire, un N-alkénylamide, un imide, une dicétopipérazine, un nitrile ou un amide d'acide gras contenant du soufre, de préférence un amide d'acide gras secondaire, un amide d'acide gras tertiaire, un N-alkénylamide, un imide, une dicétopipérazine, un nitrile ou un amide d'acide gras contenant du soufre.

7. Procédé selon la revendication 1, dans lequel deux ou plusieurs prétraitements des matières premières sont effectués en séquence à l'étape (v).

8. Procédé selon la revendication 1 ou 7, dans lequel le prétraitement de la matière première est, ou les prétraitements sont, choisis parmi un dégommage, un traitement thermique, un traitement acide, tel qu'un traitement à l'acide fort, une filtration, un blanchiment à l'aide d'un adsorbant ou toute combinaison de ceux-ci.

9. Procédé selon l'une des revendications 1 à 8, dans lequel la matière première renouvelable prétraitée est soumise à un hydrotraitement en présence d'un catalyseur choisi parmi Pd, Pt, Ni, Co, Mo, Ru, Rh, W, ou toute combinaison de ceux-ci, tel que CoMo, NiMo, NiW, CoNiMo, sur un support, dans lequel le support est de préférence de l'alumine et/ou de la silice, et un produit liquide est récupéré.

10. Procédé selon l'une des revendications 1 à 9, dans lequel l'hydrotraitement comprend l'hydrodésoxygénation dans des conditions de réaction comprenant une température comprise 100 et 500 °C, de préférence entre 250 et 400 °C, de préférence entre 280 et 350 °C, de préférence encore 300 et 330 °C, et/ou une pression comprise entre 0,1 à 20 MPa, de préférence de 0,2 à 8 MPa, et le produit d'hydrotraitement est un produit d'hydrodésoxygénation.

11. Procédé selon la revendication 10, dans lequel le produit d'hydrodésoxygénation contient plus de 99 % en poids d'hydrocarbures et moins de 0,3 wppm d'azote, mesuré en tant qu'azote élémentaire.

12. Procédé selon l'une des revendications 1 à 11, dans lequel le produit liquide issu de l'hydrotraitement est soumis à l'hydroisomérisation en présence d'un catalyseur d'hydroisomérisation contenant un support, un métal et un autre matériau catalytique, ledit support étant choisi parmi Al2O3 et SiO2, ledit métal étant choisi parmi Pt, Pd et Ni, et ledit autre matériau catalytique étant choisi parmi SAPO-11 et SAPO-41 et ZSM-22 ou ZSM-23, pour produire des hydrocarbures paraffiniques ramifiés.

13. Procédé selon la revendication 12, dans lequel l'hydroisomérisation est réalisée à une température de 250 à 400 °C, de préférence de 280 à 370 °C, de préférence encore de 300 à 350 °C, et/ou à une pression de 1 à 6 MPa, de préférence 2 à 5 MPa, de préférence encore de 2,5 à 4,5 MPa.
